# EUROPÄISCHE PATENTANMELDUNG

(11) **EP 4 745 489 A1**
(43) Veröffentlichungstag der Anmeldung: **20.05.2026**
(21) Anmeldenummer: 25214583.4
(22) Anmeldetag: 10.11.2025
(51) Int. Cl.: F25B 41/00, F04F 5/00

(54) **STRAHLPUMPENEINHEIT UND KÄLTEMITTELKREISLAUF**

(30) Priorität: 14.11.2024 DE 102024210951; 07.11.2025 DE 102025145915
(71) Anmelder: Robert Bosch GmbH, 70442 Stuttgart (DE)
(72) Erfinder: Heber, Frank, 88480 Achstetten (DE); Kromer, Markus, 71272 Renningen (DE); Pracht, Sofiya, 01187 Dresden (DE); Frey, Yannick Fabian, 72072 Tuebingen (DE); Loosen, Simon, 70439 Stuttgart (DE); Tschismar, Oliver, 72555 Metzingen (DE)

(57) **Zusammenfassung**

Die Erfindung betrifft eine Strahlpumpeneinheit (300) mit zumindest zwei zueinander parallelgeschalteten Strahlpumpen (100) zum Fördern eines Saugfluids (242) in einem Kältemittelkreislauf (200) eines Temperiersystems unter Verwendung eines Treibfluids (231) unter Ausnutzung des Bernoulli-Effekts, wobei jede der zumindest zwei Strahlpumpen eine Primärdüse (103) zum Beschleunigen des Treibfluids, eine Sekundäranschlussschnittstelle (102) zum Zuführen des Saugfluids, ein Mischrohr (104) stromab der Primärdüse (103) und stromab der Sekundäranschlussschnittstelle (102) und einen Diffusor (105) stromab des Mischrohres (104) aufweist, wobei die Strahlpumpeneinheit eine gemeinsame Druckleitung (310) zum Zuführen des Treibfluids zu den parallelgeschalteten Strahlpumpen (100) aufweist, wobei die zumindest zwei Strahlpumpen geometrisch parallel zueinander auf einer gekrümmten Linie, z.B. Kreislinie, angeordnet sind. Ferner wird ein Kältemittelkreislauf (200) mit einer solchen Strahlpumpeneinheit (300) vorgeschlagen.

## Beschreibung

Die vorliegende Erfindung betrifft eine Strahlpumpe zum Fördern eines Saugfluids in einem Kältemittelkreislauf eines Temperiersystems sowie einen Kältemittelkreislauf mit einer solchen Strahlpumpe.

### Hintergrund der Erfindung

Strahlpumpen (auch als Ejektoren bezeichnet) können beispielsweise Anwendung in Kältekreisläufen von Temperiersystemen (beispielsweise zu Temperieren einer oder mehrerer Komponenten eines Fahrzeugs) finden. Ein Ejektor besitzt eine Primärströmung und eine Sekundärströmung, die sich im Ejektor mischen. Die Primärströmung (Treibfluid) wird bei hohem Druck durch eine Düse geleitet und tritt mit hoher Geschwindigkeit, und dadurch geringem Druck aus der Düse aus. Die Sekundärströmung (Saugfluid) startet bei deutlich niedrigerem Druck als die Primärströmung, wird aber ebenfalls in einer Düse beschleunigt. Die beiden Strömungen mischen sich und der Anteil der Sekundärströmung wird damit beschleunigt, da die Primärströmung mit sehr hoher Geschwindigkeit aus der Düse austritt und die Sekundärströmung mitreißt (dabei wird Impuls von der Primärströmung auf die Sekundärströmung übertragen). Handelt es sich um einen Überschall-Ejektor, tritt ein Verdichtungsstoß am Ende des Mischrohrs auf, mit dem der Druck wieder ansteigt. In einem anschließenden Diffusor kann zusätzlich kinetische Energie in Druck umgewandelt werden. In Summe kann in einem Ejektor durch die Expansion eines Hochdruckstroms (Primärstrom) ein Sekundärstrom bei niedrigerem Druck angesaugt werden. Nach Austritt aus dem Ejektor herrscht bei korrekter Auslegung ein höherer Druck als am Sekundäreinlass.

### Offenbarung der Erfindung

Erfindungsgemäß werden eine Strahlpumpeneinheit und ein Kältemittelkreislauf mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung bedient sich der Maßnahme, mehrere Strahlpumpen (je nach Betriebspunkt (eher evakuierend oder eher verdichtend) auch als Ejektoren oder Injektoren bezeichnet) parallel zueinander in einer Strahlpumpeneinheit zusammenzuschließen. Diese Maßnahme dient insbesondere dazu sicherzustellen, dass die Strahlpumpen in ihrem jeweils optimalen Betriebspunkt betrieben werden können. Insbesondere in Temperiersystemen von Fahrzeugen können die Leistungsanforderungen an eine Strahlpumpe sehr stark schwanken. Durch die starre Geometrie der Strahlpumpe kann diese jedoch typischerweise nur in einem relativ engen Verhältnisbereich zwischen Primärdruck und Sekundärdruck effizient betrieben werden. Eine Strahlpumpe mit starrer Geometrie lässt sich nämlich nur in einem definierten Betriebspunkt (fester Massenstrom, Druckverhältnis) betreiben. Die Strahlpumpen der erfindungsgemäßen Strahlpumpeneinheit sind daher dazu ausgelegt, einzeln aktiviert und deaktiviert zu werden, so dass wahlweise keine, eine oder mehrere Strahlpumpen gleichzeitig aktiv sind und das Saugfluid verdichten. Durch die Parallelschaltung mehrerer Strahlpumpen kann dementsprechend ein größerer Betriebsbereich abgedeckt werden, als dies mit einer einzelnen Strahlpumpe möglich wäre. Dadurch kann beispielsweise verhindert werden, dass sich bei mit Überschallströmung arbeitenden Strahlpumpen der Verdichtungsstoß weiter stromab des Mischrohres in einen Diffusor verlagert und damit die Effizienz der Strahlpumpe verringert. Der Diffusor dient dazu, kinetische Energie des Mischfluids in Druck (also potentielle Energie) umzuwandeln. Diese Aufgabe kann der Diffusor nur dann effizient wahrnehmen, wenn das ihn durchströmende Fluid sich mit einer Geschwindigkeit unterhalb der Schallgeschwindigkeit bewegt, da die divergierende Wandung des Diffusors auf eine supersonische Strömung als Düse wirkt. Durch Aktivierung einer den aktuellen Leistungsanforderungen angepassten Anzahl an Strahlpumpen wird sichergestellt, dass der Verdichtungsstoß (und damit auch die Abbremsung der Strömung unter die Schallgeschwindigkeit) innerhalb des Mischrohres (idealerweise in einem Endbereich des Mischrohrs) erfolgt und damit eine subsonische Eingangsströmung in den Diffusor vorliegt.

Eine im Rahmen der Erfindung verwendbare Strahlpumpe weist eine Primärdüse zum Beschleunigen des Treibfluids und eine Sekundäranschlussschnittstelle zum Zuführen des Saugfluids sowie ein Mischrohr stromab der Primärdüse und stromab der Sekundäranschlussschnittstelle und einen Diffusor stromab des Mischrohres auf. Strahlpumpen können grundsätzlich transsonisch oder subsonisch betrieben werden. Bei einer transsonisch betriebenen Strahlpumpe überschreitet das Treibfluid auf seinem Weg durch die Primärdüse die Schallgeschwindigkeit. Dies hat Auswirkungen auf das Design der Düse, da für subsonische Strömungen eine konvergente Strömungsführung beschleunigend wirkt, für supersonische Strömungen hingegen eine divergente Strömungsführung. Zumindest das Design der Primärdüse ist daher abhängig von der angestrebten Strömungsgeschwindigkeit. Im Falle einer subsonisch betriebenen Strahlpumpe wird die Schallgeschwindigkeit an keiner Stelle überschritten.

In der erfindungsgemäßen Strahlpumpeneinheit sind, wie bereits erwähnt, zumindest zwei Strahlpumpen zueinander parallelgeschaltet. Die zueinander parallelgeschalteten Strahlpumpen sind dabei geometrisch parallel zueinander auf einer gekrümmten Linie, insbesondere einer Linie, die den Umfang einer ovalen Form bildet, wie beispielsweise einer Kreislinie oder Ellipsenlinie, angeordnet. Im Rahmen dieser Erfindung werden Strahlpumpen als geometrisch parallel bezeichnet, wenn die Bruttoströmungsrichtungen (Verbindungsgerade vom Zentrum der Primärdüse zum Zentrum des Ausgangsanschlusses bzw. des Diffusors) der parallelen Strahlpumpen um max. 10° voneinander abweichen und/oder wenn eine größte Abmessung der Form, auf der die primärseitigen Anschlussschnittstellen liegen, maximal 10% von der größten Abmessung der Form, auf der die Ausgänge der Diffusoren liegen, abweicht. Wie erwähnt, kann die Form, auf der die primärseitigen Anschlussschnittstellen liegen, ein Kreis sein, wobei dann die größte Abmessung der Durchmesser ist.

Die erfindungsgemäße Strahlpumpeneinheit weist eine gemeinsame Druckleitung zum Zuführen des Treibfluids zu den parallelgeschalteten Strahlpumpen auf. Beispielsweise können die zumindest zwei Strahlpumpen jeweils als Rohr-Ejektoren bereitgestellt sein, die z.B. durch Schweißen mechanisch miteinander verbunden oder in einen gemeinsamen Anschlussblock, der insbesondere auch die gemeinsame Druckleitung beherbergt, eingelötet werden können. Unter Rohr-Ejektoren werden herkömmlicherweise zwar Strahlpumpen verstanden, deren strömungsformende Komponenten (auch als "Kern" bezeichnet) jeweils in ein eigenes (für jede Strahlpumpe individuelles) Rohrstück als Gehäuse bzw. Mantel eingebaut sind. Im Rahmen dieser Erfindung werden jedoch auch solche Strahlpumpen als Rohr-Ejektoren bezeichnet, deren Kerne in ein gemeinsames Rohrstück als Mantel eingebaut sind. Insbesondere kann dabei ein Kern strömungsformende Komponenten mehrerer Strahlpumpen aufweisen, so dass insgesamt die erforderliche Anzahl an Bauteilen reduziert wird. Beispielsweise können die strömungsformenden Komponenten zumindest teilweise aus einem Kunststoff und/oder einem bei vergleichsweise niedriger Temperatur schmelzenden Metall, z.B. durch Spritzgießen, gefertigt sein und in das Rohrstück eingepresst sein. Damit ist eine kostengünstige Massenfertigung der Strahlpumpen möglich.

Gemäß zumindest einer Ausgestaltung können alle Strahlpumpen, die in der Strahlpumpeneinheit parallelgeschaltet sind, identisch zueinander ausgestaltet sein, was sich günstig auf die Herstellungskomplexität auswirkt. Alternativ kann jedoch zumindest eine der zumindest zwei Strahlpumpen in ihrer Ausgestaltung von den übrigen der zumindest zwei Strahlpumpen abweichen. Beispielsweise kann eine der Strahlpumpen kleiner dimensioniert sein, um eine feinere Abstufung der Betriebsintervalle zu ermöglichen.

Gemäß zumindest einer Ausgestaltung ist ein gemeinsamer Stellmechanismus, beispielsweise ein Aktor, zum selektiven Öffnen und Schließen der gemeinsamen Druckleitung für einzelne oder alle der parallelgeschalteten Strahlpumpen vorgesehen. Der gemeinsame Stellmechanismus (z.B. eine Drehscheibe, die nacheinander mehrere Öffnungen, die jeweils mit einer Anschlussschnittstelle der parallelgeschalteten Strahlpumpen verbunden sind, freigibt bzw. verschließt) ermöglicht eine Steuerung mit besonders geringem Aufwand bzgl. Mechanik und Regelung. Herkömmlicherweise könnte beispielsweise jede der parallelgeschalteten Strahlpumpen mit separaten (z.B. elektromechanischen) Ventilen angesteuert werden. Im Rahmen dieser Ausgestaltung ist demgegenüber eine gemeinsame Ansteuerung mit nur einem einzigen Stellmechanismus möglich. Für den Stellmechanismus kann dabei neben einer aktiven Ansteuerung (z.B. elektromechanischer Aktor) auch eine passive Ansteuerung, beispielsweise unter Verwendung eines thermomechanischen Elements (z.B. Thermowachs, Bimetall o.Ä.), eingesetzt werden, wodurch der Regelungsaufwand komplett entfällt.

Die beispielsweise für den gemeinsamen Stellmechanismus verwendbare Drehscheibe kann in einem Gehäuse mit im Wesentlichen kreisförmiger Innengeometrie aufgenommen sein und dazu eingerichtet sein, in Abhängigkeit von einer rotatorischen Stellung der Drehscheibe keinen, einen oder mehrere Ausgänge des Gehäuses freizugeben, so dass an diesen Ausgängen (im Folgenden auch als "Öffnungen" bezeichnet) angeschlossene Strahlpumpen wahlweise mit dem Treibfluid versorgt werden, oder von der Versorgung mit dem Treibfluid abgeschnitten werden. Dazu kann die Drehscheibe beispielsweise mit einer Trennwand ausgestattet sein, die zum Beispiel radial auf der Drehscheibe verläuft und mit einer ebenfalls radial verlaufenden, nach innen in das Gehäuse ragenden, die Drehscheibe berührenden, feststehenden Wand des Gehäuses einen durch das Treibfluid durchströmbaren Winkelbereich definiert. Die Ausgänge können in Umfangsrichtung über die Grundfläche und/oder eine seitliche Mantelfläche des Gehäuses verteilt angeordnet sein. Alternativ kann die Drehscheibe Löcher aufweisen, die mit den Öffnungen des Gehäuses zur Deckung gebracht werden können, um eine Fluidverbindung zu den zu aktivierenden Strahlpumpen herzustellen.

Gemäß zumindest einer Ausgestaltung ist eine gemeinsame Saugleitung zum Zuführen des Saugfluids zu den parallelgeschalteten Strahlpumpen und optional ein gemeinsamer Stellmechanismus, z.B. Aktor, zum selektiven Öffnen und Schließen der gemeinsamen Saugleitung für einzelne oder alle der parallelgeschalteten Strahlpumpen vorgesehen. Alternativ oder zusätzlich können eine gemeinsame Ausgangsleitung zum Abführen des Treibfluids und des Saugfluids (also des Mischfluids) aus den parallelgeschalteten Strahlpumpen und optional ein gemeinsamer Stellmechanismus, z.B. Aktor, zum selektiven Öffnen und Schließen der gemeinsamen Ausgangsleitung für einzelne oder alle der parallelgeschalteten Strahlpumpen vorgesehen sein. Bei einer selektiven Aktivierung bzw. Deaktivierung der Sekundärschnittstelle bzw. des Auslasses ergibt sich der zusätzliche Vorteil, dass eine Rückströmung des Mischfluids zu der gemeinsamen Saugleitung durch Strahlpumpen, die gerade nicht mit Treibfluid versorgt werden, verhindert wird. Der Stellmechanismus der Sekundärseite (also der Stellmechanismus, der die gemeinsame Saugleitung bzw. die Ausgangsleitung öffnet und schließt) kann insbesondere mit dem gemeinsamen Stellmechanismus der Primärseite verbunden sein, so dass ein einziges Ansteuerungselement (z.B. Aktor) sämtliche Stellaufgaben übernehmen kann. Insbesondere im Falle des Stellmechanismus zum Öffnen und Schließen der Ausgangsleitung kann anstelle der bereits beschriebenen Drehscheibe auch ein flaches Sperrelement (z.B. eine verschiebbare Wand o.Ä.) verwendet werden. Allerdings kann diese Ausgestaltung mit einem flachen Sperrelement, abhängig von der konkret verwendeten gemeinsamen Druckleitung bzw. Saugleitung, auch zum Öffnen und Schließen dieser verwendet werden.

Alternativ kann zum Blockieren der Rückströmung am Ende jedes Diffusors ein eigenes Rückschlagventil vorgesehen sein. In dieser Ausführungsvariante wird die Rückflussblockierung mittels einzelner Rückschlagventile vorgeschlagen, die am Ausgang der Strahlpumpeneinheit (im Mitteldruckkanal) eingebaut werden und dadurch auf einer gemeinsamen Platte außerhalb eines Gehäuses der jeweiligen Strahlpumpe bzw. in jeweilige Anschlussschnittstellen der gemeinsamen Ausgangsleitung zusammenmontiert werden können. Somit sind die Rückschlagventile einfacher zu installieren, was die Produktionskosten senken kann, und auch die Zugänglichkeit für Reparatur- bzw. Wartungsarbeiten erhöht.

Alternativ zu der oben beschriebenen Ausgestaltung der Drehscheibe kann die Drehscheibe auch einen Hohlraum aufweisen, in den zumindest eine in einer Grund- und/oder Deckfläche und/oder einer Mantelfläche der Drehscheibe vorgesehene Aussparung mündet, wobei die zumindest eine Aussparung dazu eingerichtet ist, in Abhängigkeit von einer Stellung der Drehscheibe zumindest teilweise mit Öffnungen in einer Grund- bzw. Deckfläche bzw. einer Mantelfläche eines die Drehscheibe aufnehmenden Gehäuses zur Deckung zu kommen. Gemäß zumindest einer Ausgestaltung ist dabei die zumindest eine Aussparung dazu eingerichtet, eine oder mehrere der Öffnungen in der Wandung des Gehäuses gleichzeitig freizugeben. Beispielsweise kann die Aussparung eine Ausdehnung entlang einer Umfangsrichtung der Drehscheibe aufweisen, die einen Abstand zwischen zwei benachbarten Öffnungen des Gehäuses übersteigt, so dass ein und dieselbe Aussparung in Abhängigkeit von einer relativen rotatorischen Stellung der Drehscheibe zu dem Gehäuse gleichzeitig keine, eine oder mehrere der Öffnungen freigeben kann. Eine Zuleitung des Saugfluids bzw. Treibfluids bzw. eine Ableitung des Mischfluids kann über den Hohlraum im Inneren der Drehscheibe erfolgen (z.B. über eine axiale Öffnung in einer der Stirnseiten der Drehscheibe).

Alternativ dazu kann die Drehscheibe auch einen (flachen) Vollzylinder umfassen, in dessen Grund- und/oder Deckfläche und/oder Mantelfläche zumindest eine Vertiefung vorgesehen ist, die in ihrer Ausgestaltung der hier beschriebenen zumindest einen Aussparung entspricht. In einem solchen Fall kann die zumindest eine Vertiefung insbesondere einen Kanal zum Zuführen des Saug- bzw. Treibfluids bzw. zum Abführen des Mischfluids umfassen.

Beispielsweise können als die zumindest eine Aussparung bzw. die zumindest eine Vertiefung kreisförmige Bohrungen, die durch diskrete Bewegungen der Drehscheibe mit den (beispielsweise ebenfalls kreisförmigen) Öffnungen zur Deckung gebracht werden können, verwendet werden. Weitere Optionen sind in Umfangsrichtung der Drehscheibe verlängerte Aussparungen bzw. Vertiefungen, die mit mehreren der Öffnungen gleichzeitig zur Deckung kommen können bzw. über einen größeren Bewegungsbereich hinweg mit der jeweiligen Öffnung in Deckung bleiben, so dass kontinuierliche Bewegungen der Drehscheibe ermöglicht werden (z.B. um eine zuzuschaltende Strahlpumpe langsam anzufahren und nicht schlagartig mit Treib- bzw. Saugfluid zu versorgen).

Gemäß zumindest einer Ausgestaltung ist ein Flüssigphasenabscheider innerhalb einer von der gekrümmten Linie umgebenen Fläche bzw. innerhalb der gekrümmten Linie (z.B. Kreislinie), auf der die Strahlpumpen angeordnet sind, angeordnet. Dadurch wird der Bauraum optimal ausgenutzt und der Flüssigphasenabscheider wird durch die Strahlpumpen thermisch von der Umgebung isoliert, was sich positiv auf die Effizienz eines gesamten Kältemittelkreislaufs auswirkt.

Ein erfindungsgemäßer Kältemittelkreislauf für ein Temperiersystem weist zumindest eine erfindungsgemäße Strahlpumpeneinheit, einen Kompressor zum Verdichten eines Kältemittels, einen Kältemittelkondensator zum zumindest teilweisen Kondensieren des Kältemittels stromab des Kompressors, und einen Kältemittelverdampfer zum zumindest teilweisen Verdampfen des Kältemittels auf, wobei die Strahlpumpe so angeordnet ist, dass ihr das zumindest teilweise kondensierte Kältemittel stromab des Kältemittelkondensators als Treibfluid und das zumindest teilweise verdampfte Kältemittel stromab des Kältemittelverdampfers als Saugfluid zugeführt wird, wobei der Gasanteil saugseitig zu dem Kompressor geführt wird und der Flüssiganteil zu dem Kältemittelverdampfer geführt wird.

Gemäß zumindest einer Ausgestaltung mündet ein Ausgang der Strahlpumpe in den Flüssigphasenabscheider, der zum Trennen eines Flüssiganteils von einem Gasanteil des Kältemittels eingerichtet ist.

Insbesondere kann die erfindungsgemäße Strahlpumpeneinheit bzw. der erfindungsgemäße Kältemittelkreislauf in einem Temperiersystem eines Fahrzeugs, beispielsweise eines zumindest teilweise elektrisch antreibbaren Fahrzeugs, verwendet werden. Das Temperiersystem kann insbesondere zur Temperierung des Fahrzeuginnenraums und/oder der Antriebsbatterie und/oder des Antriebsmotors und/oder weiterer Komponenten des Fahrzeugs verwendet werden. Es sei jedoch ausdrücklich darauf hingewiesen, dass Ausgestaltungen der erfindungsgemäßen Strahlpumpeneinheit bzw. des erfindungsgemäßen Kältemittelkreislaufs auch in anderen mobilen und/oder stationären Anwendungsszenarien, beispielsweise zur Kühlung und/oder Beheizung und/oder Entfeuchtung von Gebäuden (z.B. Klimaanlage, Wärmepumpe, ...), verwendet werden können. Insbesondere erfolgt die Erwärmung und/oder Kühlung und/oder Entfeuchtung des Gebäudes vorzugsweise durch eine Vorrichtung, insbesondere ein HVAC-System (Heating, Ventilation and Air-Conditioning - System), vorzugsweise eine Klimaanlage oder eine Wärmepumpe, welche eine erfindungsgemäße Strahlpumpeneinheit bzw. einen erfindungsgemäßen Kältemittelkreislauf aufweist. Auch ist die Verwendung der erfindungsgemäßen Strahlpumpeneinheit bzw. des erfindungsgemäßen Kältemittelkreislaufs zur Erwärmung von Trinkwasser, insbesondere in einer Warmwasser Wärmepumpe denkbar.

Es kann, unabhängig von der übrigen Ausgestaltung der Strahlpumpen, vorgesehen sein, dass die Strahlpumpen einen Mantel und einen innerhalb des Mantels angeordneten Kern aufweisen, wobei der Kern eine innere Geometrie der Strahlpumpe definiert und wobei der Mantel eine äußere Geometrie der Strahlpumpe definiert und dazu eingerichtet ist, den Kern mechanisch zu stützen. Beispielsweise können dabei mehrere Strahlpumpen (Kerne) in einem gemeinsamen Mantel aufgenommen sein, bzw. kann ein Kern mehrere Strahlpumpen innerhalb des gemeinsamen Mantels definieren. Insbesondere kann der Kern ein erstes Material aufweisen und der Mantel ein zweites Material, das sich von dem ersten Material unterscheidet, aufweisen, wobei das zweite Material eine höhere mechanische Festigkeit und/oder eine höhere Härte als das erste Material aufweist und/oder wobei bei einer vorbestimmbaren Temperatur das erste Material eine höhere Verformbarkeit aufweist als das zweite Material. Durch die höhere Verformbarkeit des ersten Materials kann eine Innenkontur der Strahlpumpe mit besonders hoher Präzision (beispielsweise unter Verwendung eines Spritzgussverfahrens, o.Ä.) gefertigt werden. Die Innenkontur ist besonders relevant für die Auslegung, da durch sie die Strömungen des Treibfluids und des Saugfluids gesteuert werden. Daher ist die Präzision der Innenkontur beispielsweise auch ausschlaggebend für die Effizienz der Strahlpumpe. Durch die Stützung des Kerns durch die Hülle, die das mechanisch stabilere zweite Material umfasst, kann dennoch eine hohe Druckfestigkeit der gesamten Strahlpumpe gewährleistet werden und beispielsweise mit erheblich weniger erstem Material für den Kern gearbeitet werden. Details zu möglichen Ausgestaltungen einer solchen Strahlpumpe mit unterschiedlichen Materialien in Mantel und Kern sind in der parallelen Patentanmeldung DE 102025145870.7, insbesondere in Figur 1 und der zugehörigen Beschreibung, offenbart.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

- Figur 1: zeigt eine Strahlpumpe, wie sie gemäß zumindest einer Ausgestaltung der Erfindung verwendet werden kann.
- Figur 2: zeigt einen Kältemittelkreislauf gemäß einer Ausgestaltung der Erfindung.
- Figur 3: zeigt eine Ausgestaltung einer erfindungsgemäßen Strahlpumpeneinheit.
- Figur 4A: zeigt eine erste Ausgestaltung eines Stellmechanismus zum Aktivieren einzelner oder mehrerer Strahlpumpen einer Strahlpumpeneinheit, beispielsweise gemäß Fig. 3, wie er in Ausgestaltungen der Erfindung verwendet werden kann, in einer Draufsicht.
- Figur 4B: zeigt den Stellmechanismus aus Fig. 4A in einer seitlichen Ansicht.
- Figur 5A: zeigt eine zweite Ausgestaltung des Stellmechanismus, wie er in Ausgestaltungen der Erfindung verwendet werden kann, in einer Draufsicht.
- Figur 5B: zeigt den Stellmechanismus aus Fig. 5A in einer seitlichen Schnittansicht.
- Figur 6A: zeigt eine dritte Ausgestaltung des Stellmechanismus, wie er in Ausgestaltungen der Erfindung verwendet werden kann, in einer Draufsicht.
- Figur 6B: zeigt den Stellmechanismus aus Fig. 6A in einer perspektivischen Hineinsicht.
- Figur 7: zeigt eine weitere Ausgestaltung einer erfindungsgemäßen Strahlpumpeneinheit in einer seitlichen Schnittansicht.

### Ausführungsform(en) der Erfindung

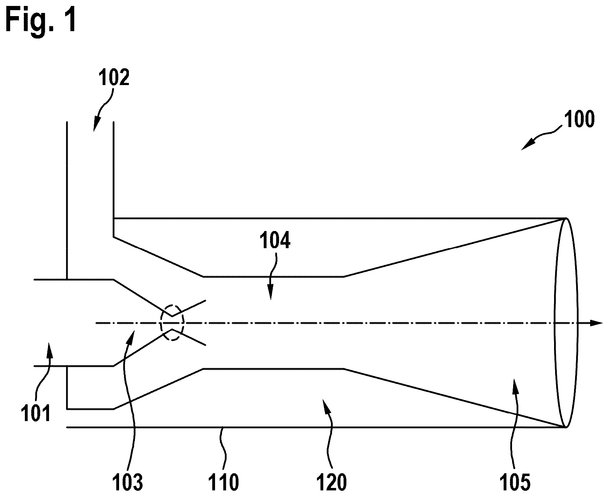

In Figur 1 ist eine Strahlpumpe, wie sie gemäß zumindest einer Ausgestaltung der Erfindung verwendet werden kann, schematisch anhand einer Längsschnittzeichnung gezeigt und insgesamt mit 100 bezeichnet.

Die Strahlpumpe umfasst eine erste Anschlussschnittstelle 101 zum Zuführen eines Treibfluids zu einer Primärdüse 103 der Strahlpumpe 100 und eine zweite Anschlussschnittstelle 102 zum Zuführen eines Saugfluids in ein Mischrohr 104 der Strahlpumpe 100, das sich stromab an die Primärdüse 103 anschließt. In dem hier gezeigten Beispiel ist die Primärdüse 103 als Überschalldüse ausgebildet, die das Treibfluid (bei geeignetem Eingangsdruck des Treibfluids und geeignetem Druckabfall über die Strahlpumpe 100) auf eine Geschwindigkeit beschleunigt, die über der relevanten Schallgeschwindigkeit liegt. Ein Bereich innerhalb der Primärdüse, in dem die Überschreitung der Schallgeschwindigkeit erfolgt, ist mit einer gestrichelten Ellipse gekennzeichnet. Durch diese Beschleunigung verringert sich der Druck des Treibfluids auf dem Weg durch die Primärdüse 103 bis zum Eintritt in das Mischrohr 104 erheblich (z.B. von circa 30 bar auf 2 bar).

Liegt an der zweiten Anschlussschnittstelle 102 ein Saugfluid mit einem geeigneten Eingangsdruck, der typischerweise deutlich unterhalb des Eingangsdrucks des Treibfluids liegen kann (z.B. 2 bar), an, wird das Saugfluid mittels Impulsübertrag von dem Treibfluid in dem Mischrohr 104 stromab der Primärdüse 103 auf das Saugfluid beschleunigt. Dabei wird das Treibfluid entsprechend abgebremst. Bei optimalen Betriebsbedingungen unterschreitet das Treibfluid dadurch in einem Endabschnitt 140 an einem von der Primärdüse abgewandten Ende des Mischrohrs 104 die Schallgeschwindigkeit wieder.

Stromab des Mischrohres 104 schließt sich ein Diffusor 105 in Form eines sich in seinem Querschnitt weitenden Bereichs an, der zur weiteren Abbremsung und Druckerhöhung in dem gemischten Fluid (auch als Mischfluid bezeichnet) dient. Beispielsweise kann bei den oben genannten Betriebsbedingungen am Ausgang des Diffusors ein Ausgangsdruck von 3 bis 4 bar erzielt werden.

Insbesondere kann die Strahlpumpe 100 so ausgestaltet sein, dass deren strömungsformende Komponenten 120 (auch als Kern 120 bezeichnet), beispielsweise als Spritzgussteil, in ein Rohrstück als Gehäuse bzw. Mantel 110 eingebaut sind. Wie im Folgenden noch näher erläutert wird, umfasst dabei der Kern 120 insbesondere die strömungsformenden Komponenten mehrerer Strahlpumpen, bzw. sind in einem gemeinsamen Mantel 110 mehrere Kerne 120 aufgenommen.

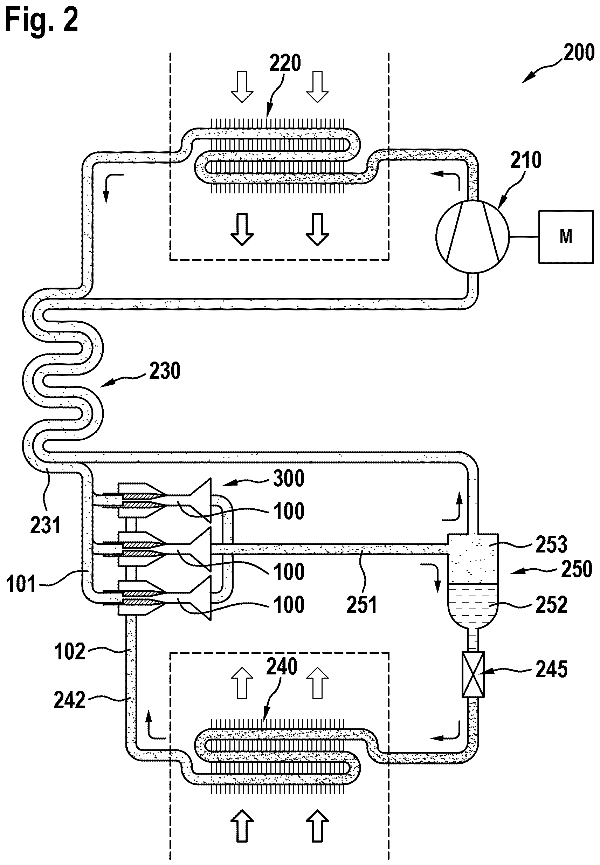

In Figur 2 ist ein Kältemittelkreislauf gemäß einer Ausgestaltung der Erfindung schematisch anhand eines Funktionsdiagramms gezeigt und insgesamt mit 200 bezeichnet.

Der Kältemittelkreislauf 200 weist einen Kompressor 210 zum Verdichten eines Kältemittels, beispielsweise Propan, Kohlenstoffdioxid oder ein anderes geeignetes Gas, das unter den gewählten Betriebsbedingungen zumindest teilweise kondensiert werden kann, einen Kältemittelkondensator 220, eine Strahlpumpeneinheit 300, die mehrere parallelgeschaltete Strahlpumpen 100, die insbesondere wie in Bezug auf Figur 1 beschrieben ausgestaltet sein können, umfasst, einen Flüssigphasenabscheider 250 und einen Kältemittelverdampfer 240 zum Übertragen von Wärme auf das Kältemittel auf. Stromauf des Kältemittelverdampfers 240 ist ein Expansionsventil 245 zum Entspannen des Kältemittels angeordnet.

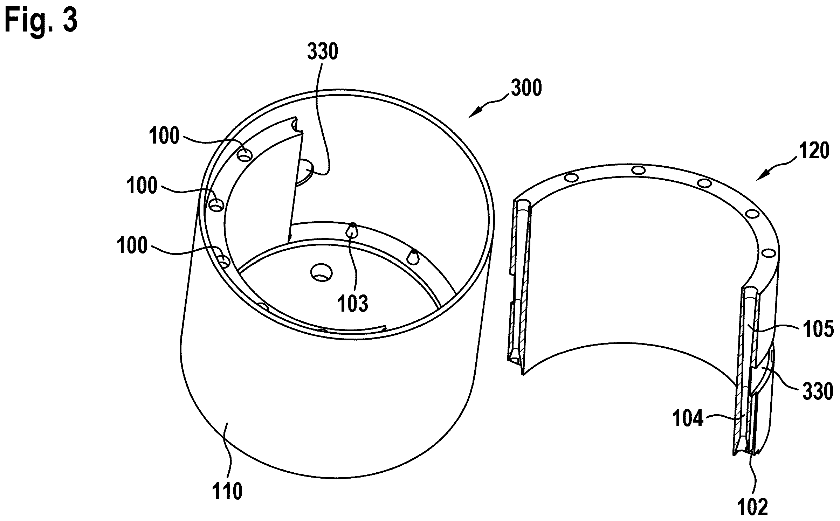

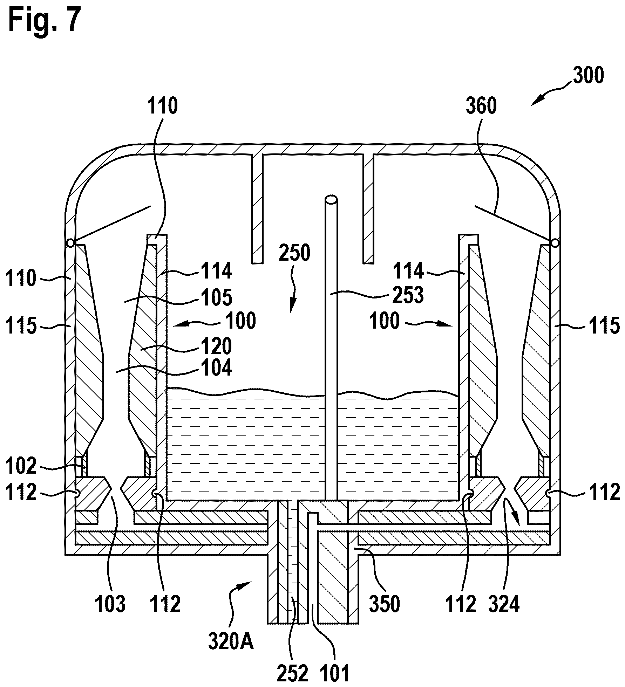

Die Strahlpumpeneinheit 300 kann insbesondere wie in Figur 3 oder 7 gezeigt ausgestaltet sein. Wie aus Figur 7 ersichtlich, kann der Flüssigphasenabscheider 250 in die Strahlpumpeneinheit 300 integriert sein und in der Mitte zwischen den Strahlpumpen 100 angeordnet sein. Dies reduziert einerseits den erforderlichen Bauraum und bietet andererseits den Vorteil, dass der Flüssigphasenabscheider 250 durch die Strahlpumpen 100 thermisch von seiner Umgebung isoliert ist, was die Gesamteffizienz des Kältemittelkreislaufs 200 steigert.

Wie in Figur 2 zu sehen ist, wird die Strahlpumpeneinheit 300 in dem Kältemittelkreislauf 200 zur Vorverdichtung des aus dem Kältemittelverdampfer 240 austretenden entspannten Kältemittels 242 genutzt. Die Flüssigphase des verdichteten Kältemittels 231 nach Austritt aus dem Kältemittelkondensator 220 (und in dem gezeigten Beispiel einem weiteren Wärmetauscher 230, der zum Übertragen von Wärme zwischen dem verdichteten Kältemittel druckseitig des Kompressors und dem Kompressor saugseitig zugeführtem Kältemittel 253 vorgesehen ist) steht unter hohem Druck und wird zur Beschleunigung und Expansion als Treibfluid in die Primärdüse(n) 103 der Strahlpumpe(n) 100 geleitet. Auf der Sekundärseite (Anschlussschnittstelle 102) wird das entspannte Kältemittel 242 als Saugfluid auf Verdampferdruckniveau angesaugt. Die durch die Strahlpumpeneinheit 300 vorverdichtete Mischung 251 aus Treibfluid und Saugfluid wird in den Flüssigphasenabscheider 250 geleitet, wobei die dort abgetrennte Flüssigphase 252 danach durch das Expansionsventil 245 zum Kältemittelverdampfer 240 geleitet wird. Der in dem Flüssigphasenabscheider 250 abgetrennte Dampfanteil 253 des Kältemittels wird durch den Wärmetauscher 230 zum Kompressor 210 zurückgeleitet. Durch die Vorverdichtung mittels der Strahlpumpeneinheit 300 reduziert sich die im Kompressor 210 zu leistende Verdichtungsarbeit.

In Figur 3 ist eine Ausgestaltung einer erfindungsgemäßen Strahlpumpeneinheit noch ohne Stellmechanismus schematisch anhand von Teilschnittzeichnungen in einer perspektivischen Draufsicht dargestellt und insgesamt mit 300 bezeichnet. Dabei ist eine erste Strahlpumpe 100, die insbesondere so ausgestaltet sein kann, wie in Bezug auf Figur 1 erläutert, mit weiteren Strahlpumpen 100, die insbesondere zu der ersten Strahlpumpe 100 identisch ausgestaltet sein können, parallelgeschaltet. Die ersten Anschlussschnittstellen 101 der Strahlpumpen 100 sind in der gezeigten Ausführungsform auf einer Kreislinie als gekrümmte Linie angeordnet. In dieser Ausgestaltung sind auch die Strahlpumpen 100 selbst bzw. die Mittelachsen der Mischrohre geometrisch parallel zueinander auf der Kreislinie angeordnet. Es sei jedoch darauf hingewiesen, dass dies keine ideal exakte Kreislinie bedeuten muss, sondern auch Abweichungen innerhalb zulässiger Toleranzen erlaubt sind.

In dem gezeigten Beispiel sind die Strahlpumpen 100 in Form eines oder mehrerer Spritzgussteile ("Kern" 120) bereitgestellt, die in einen gemeinsamen Mantel 110, der hier beispielsweise aus einem Rohrstück besteht, eingesetzt sind. ausgebildet. In dem Kern 120 sind die strömungsformenden Komponenten der Strahlpumpen (Primärdüse 103, Sekundäranschlussschnittstelle 102, Mischrohr 104 und Diffusor 105) eingeformt. Der Mantel 110 stützt den Kern 120 mechanisch ab und weist einen Anschlussstutzen einer gemeinsamen Saugleitung 330 auf, die in dem gezeigten Beispiel eine in Umfangsrichtung außen um den Kern 120 verlaufende Nut mit in axialer Richtung verlaufenden Stichkanälen zur Zuleitung des Saugfluids zu den Sekundäranschlussschnittstellen 102 der einzelnen Strahlpumpen umfasst. Zwischen den Strahlpumpen 100 (im Inneren des Kerns 120) befindet sich ein Hohlraum, in den (wie in Figur 7 dargestellt) weitere Komponenten eines Kältemittelkreislaufs eingebaut werden können. Dieser Hohlraum ist beispielsweise über eine in dem Boden des Hohlraums befindliche (in Figur 3 außermittig dargestellte) Öffnung zugänglich.

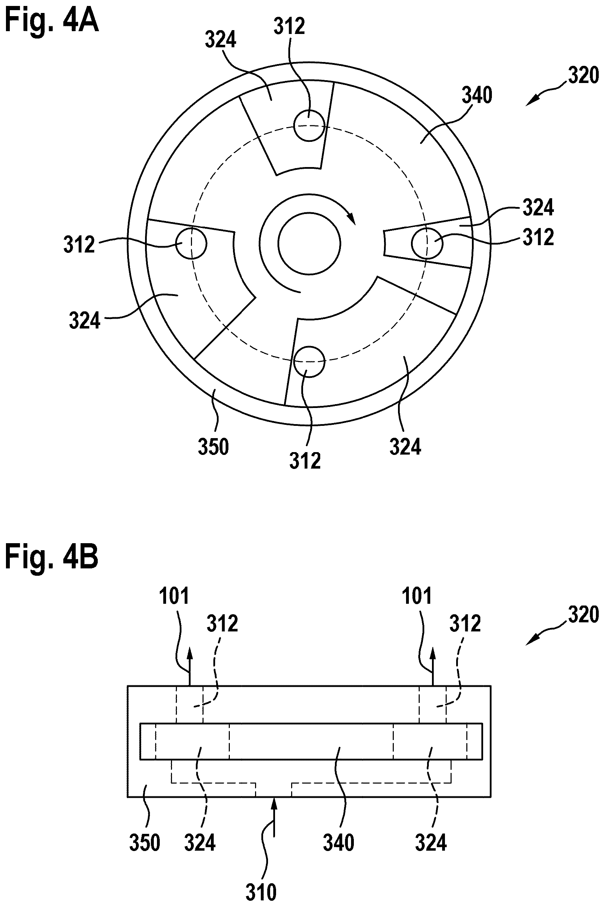

In Figuren 4 bis 6 sind unterschiedliche Varianten von Stellmechanismen 320, 320A, 420 zur Ansteuerung der Strahlpumpeneinheit 300 oder anderer Strahlpumpeneinheiten gezeigt. Dabei ist jeweils für jede der Ausgestaltungen eine beispielhafte Stellung des jeweiligen Stellmechanismus gezeigt, um die Funktionsweise der verschiedenen Varianten des Stellmechanismus zu verdeutlichen. Ein solcher Stellmechanismus ist unterhalb der in Fig. 3 gezeigten Strahlpumpeneinheit 300 angeordnet und versorgt die einzelnen Strahlpumpen 100 mit Treibfluid.

Der Stellmechanismus weist eine gemeinsame Druckleitung 310 zum Zuführen des Treibfluids zu den ersten Anschlussschnittstellen 101 der parallelgeschalteten Strahlpumpen 100 auf und ist eingerichtet zum selektiven Öffnen und Schlie-ßen der gemeinsamen Druckleitung 310 für einzelne oder alle der parallelgeschalteten Strahlpumpen 100.

Der Stellmechanismus 320 ist in Figur 4A in einer schematischen Draufsicht und in Figur 4B in einer Seitenansicht gezeigt. Der Stellmechanismus 320 umfasst eine Drehscheibe 340, die unterschiedlich große Aussparungen 324 aufweist, mittels derer das Treibfluid über Öffnungen 312 in einem Gehäuse 350 des Stellmechanismus 320 an die Primärdüsen 103 der Strahlpumpen 100 geleitet werden kann. Zwischen den Aussparungen 324 ist die Drehscheibe 340 massiv ausgebildet und dazu geeignet, die Öffnungen 312 zu verschließen. In dem gezeigten Beispiel erstrecken sich die Aussparungen 324 sektorartig über unterschiedlich große Abschnitte in Umfangsrichtung der Drehscheibe 340, so dass sich, je nach rotatorischer Stellung der Drehscheibe 340 relativ zu den Öffnungen 312, keine, eine oder mehrere der Öffnungen 312 mit den Aussparungen 324 zur Deckung bringen lassen, wodurch die an der jeweiligen Öffnung angeschlossene Strahlpumpe jeweils aktiviert (mit Treibfluid versorgt) wird, während Strahlpumpen, deren zugeordnete Öffnung 312 mit keiner der Aussparungen 324 überlappt, deaktiviert sind. Zweckmäßigerweise kann der Stellmechanismus 320 unmittelbar an dem Mantel 110 der Strahlpumpeneinheit 300 angebracht sein, beispielsweise indem das Gehäuse 350 des Stellmechanismus 320 auf der Seite, an der die Primärdüsen 103 der Strahlpumpen liegen, an den Mantel 110 angeschweißt ist. So können die Öffnungen 312 unmittelbar in die ersten Anschlussschnittstellen 101 münden.

Die Zuleitung des Treibfluids aus der gemeinsamen Druckleitung 310 zu den Aussparungen 324 kann beispielsweise von einer den Öffnungen 312 gegenüberliegenden Seite des Gehäuses 350 des Stellmechanismus 320 erfolgen.

Zur besseren Übersicht sind in den hier abgebildeten Stellmechanismen jeweils nur vier Öffnungen 312 gezeigt. Typischerweise kann jedoch für jede beliebige Anzahl an Strahlpumpen auch ein entsprechende Stellmechanismus mit einer ebenso großen Anzahl an Öffnungen 312 bereitgestellt werden, damit jede der Strahlpumpen individuell aktiviert und/oder deaktiviert werden kann. Es kann jedoch auch vorgesehen sein, mehrere Strahlpumpen an einer gemeinsamen Öffnung 312 anzuschließen, um diese jeweils gemeinsam zu aktivieren und zu deaktivieren.

Durch den gemeinsamen Stellmechanismus 320, der beispielsweise mittels eines elektromechanischen Aktors (nicht gesondert dargestellt) betätigt werden kann oder auch passiv (z.B. unter Verwendung eines Thermowachses, das seine räumlich Ausdehnung mit der Temperatur verändert, oder ein Bimetall) gesteuert wird, werden die jeweiligen Strahlpumpen 100 selektiv aktiviert und fördern Saugfluid aus der zweiten Anschlussschnittstelle 102, die in dem gezeigten Beispiel permanent aus der gemeinsamen Saugleitung 330 mit Saugfluid, beispielsweise aus dem in Figur 2 gezeigten Kältemittelverdampfer 240, versorgt wird. Die vorverdichtete Mischströmung am Auslass der Strahlpumpen 100 vermischt sich anschließend aus allen Strahlpumpen.

Die Anzahl der jeweils aktiven Strahlpumpen 100 ergibt sich dabei, wie erwähnt, jeweils aus der rotatorischen Stellung der Drehscheibe 340 des Stellmechanismus 320.

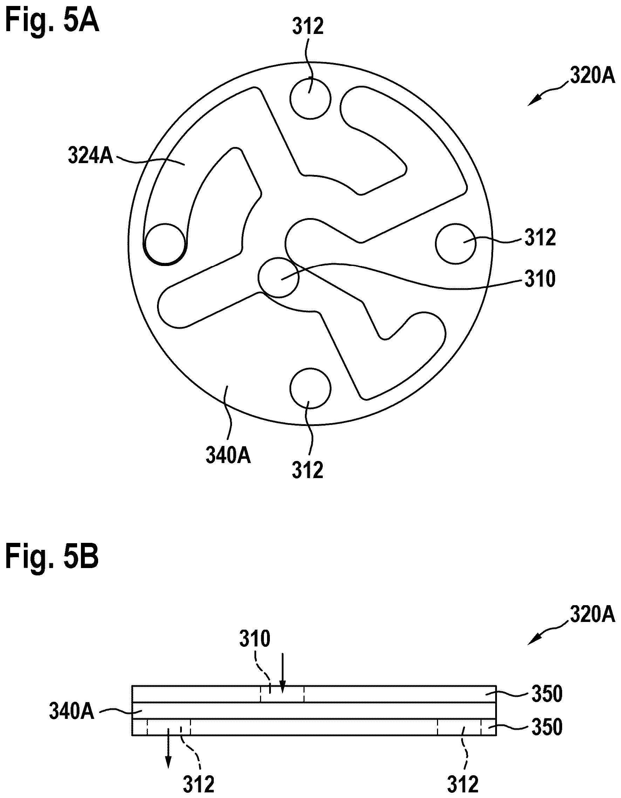

Eine zweite Ausgestaltung des Stellmechanismus der Strahlpumpeneinheit ist in Figur 5A in einer Draufsicht und in Figur 5B in einer seitlichen Schnittansicht dargestellt und mit 320A bezeichnet ist. In dieser Ausgestaltungumfasst der Stellmechanismus 320A anstelle der in Figur 4A dargestellten Drehscheibe 340 mit voneinander getrennten Aussparungen 324 eine Drehscheibe 340A mit einer komplexen bzw. unregelmäßig geformten Aussparung 324A, die funktional den Aussparungen 324 der ersten Ausgestaltung 320 entspricht, wobei jedoch innerhalb der Drehscheibe 340A eine Verbindung zwischen den einzelnen "Armen" bzw. Endabschnitten der Aussparung 324A besteht, so dass das Treibfluid aus der gemeinsamen Druckleitung 310 in jeden dieser Endabschnitte der Aussparung 324A oder, wie hier dargestellt, in diese Verbindung zwischen den Endabschnitten der Aussparung 324A eingespeist werden kann, um alle Endabschnitte der Aussparung 324A zu erreichen. Dabei ist die Richtung, aus der das Treibfluid der Drehscheibe 340A zugeführt wird, prinzipiell nicht von Bedeutung. Anstelle der in Figuren 4 und 5 dargestellten, sich jeweils über einen größeren Winkelbereich erstreckenden Aussparungen 324, 324A können auch mehrere einzelne Aussparungen, die in ihrer Ausdehnung im Wesentlichen exakt der Ausdehnung der Öffnungen 312 entsprechen, in unterschiedlichen Winkelabständen zueinander vorgesehen sein, so dass jeweils diskrete Stellungen der Drehscheibe 340, 340A zur Aktivierung der Strahlpumpen 100 führen, während Zwischenstellungen zur Deaktivierung aller Strahlpumpen genutzt werden können.

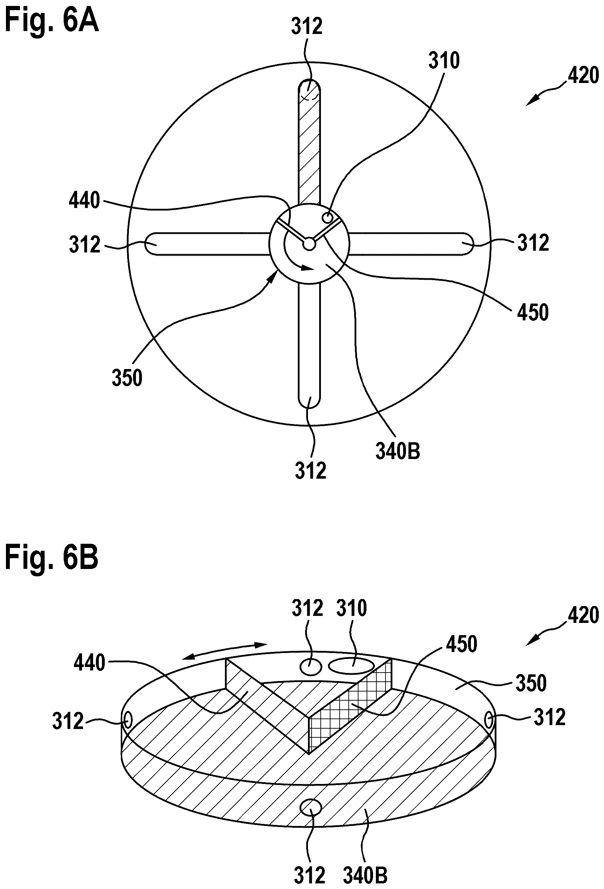

In Figur 6A ist eine dritte Ausgestaltung eines Stellmechanismus für eine erfindungsgemäße Strahlpumpeneinheit in einer Draufsicht gezeigt und insgesamt mit 420 bezeichnet. In Figur 6B ist der Stellmechanismus 420 in einer perspektivischen Ansicht gezeigt.

Diese dritte Ausgestaltung des Stellmechanismus 420 unterscheidet sich von den beiden zuvor erläuterten Ausgestaltungen 320, 320A insbesondere dadurch, dass er eine variable Geometrie des Hohlraums, durch den das Treibfluid in dem Stellmechanismus geleitet wird, aufweist.

Dazu ist anstelle einer Drehscheibe mit definierten Aussparungen 324 eine Drehscheibe 340B vorgesehen, auf der mittig ein zylinderförmiger Zapfen angeordnet ist, von dem sich eine Trennwand 440 radial nach außen erstreckt. Durch Drehung der Drehscheibe 340B wird die Position bzw. Winkelposition der Trennwand 440 innerhalb des Gehäuses (welches in der gezeigten Ausführungsform deutlich stärker als zuvor ausgebildet ist) verändert.

Weiterhin ist innerhalb des Gehäuses 350 eine ebenfalls radial verlaufende, nach innen in das Gehäuse 350 ragende feststehende Wand 450 des Gehäuses 350 angeordnet, die innen mit dem zylinderförmigen Zapfen der Drehscheibe 340B, in die Figurenebene hinein ("nach unten") mit der Drehscheibe 340B und aus der Figurenebene heraus ("nach oben") mit einem Gehäusedeckel abschließt, insbesondere (möglichst) gasdicht, um einen durch das Treibfluid durchströmbaren Winkelbereich als Hohlraum innerhalb des Gehäuses 350 zu definieren. Um einen möglichst großen Winkelbereich für die unterschiedlichen Stellungen des Stellmechanismus 420 zur Verfügung stellen zu können, mündet die gemeinsame Druckleitung 310 in dem dargestellten Beispiel in unmittelbarer Nähe der feststehenden Wand 450 in Figur 6 von "oben" in das Gehäuse 350 des Stellmechanismus 420. Die Ausgänge bzw. Öffnungen 312, die zur Versorgung der einzelnen Strahlpumpen mit dem Treibfluid dienen, können in Umfangsrichtung über eine seitliche Mantelfläche des Gehäuses 350 verteilt angeordnet sein und werden immer dann mit dem Treibfluid versorgt, wenn sie zusammen mit dem Anschluss der gemeinsamen Druckleitung 310 in dem durch die feststehende Wand 450 und die bewegliche Trennwand 440 eingeschlossenen Hohlraum liegen. Liegt eine Öffnung 312 außerhalb dieses Hohlraums, wird sie hingegen nicht mit dem Treibfluid versorgt und die an ihr angeschlossene Strahlpumpe 100 ist deaktiviert.

Unabhängig von der konkreten Ausgestaltung des Stellmechanismus 320, 320A 420 können die Drehscheibe 340, 340A, 340B und das Gehäuse 350 jeweils aus dem gleichen oder aus unterschiedlichen Materiealien gefertigt sein. Insbesondere kommt für das Gehäuse möglichst ein druckstabiles Material, beispielsweise ein Metall, z.B. Aluminium, eine Aluminiumlegierung oder Stahl, zum Einsatz. Für die Drehscheibe 340, 340A, 340B kann insbesondere ein Material, das im Kontakt mit dem Material des Gehäuses 350 einen geringen Reibwiderstand aufweist, verwendet werden, beispielsweise ein Kunststoff wie Polytetrafluorethylen (PTFE) oder dergleichen. Gegebenenfalls können auch Kombinationen aus mehreren Materialien verwendet werden, beispielsweise ein Gehäusekörper und ein Drehscheibenkern aus einem Metall und eine darauf jeweils aufgebrachte Beschichtung aus einem Kunststoff zur Verbesserung der Reibung und der Dichteigenschaften des Systems.

In Figur 7 ist eine weitere Ausgestaltung einer erfindungsgemäßen Strahlpumpeneinheit 300 schematisch in einer seitlichen Schnittansicht gezeigt. Diese Ansicht zeigt insbesondere die Anbindung der Strahlpumpeneinheit 300 an weitere Komponenten eines Kältemittelkreislaufs. Hier ist die Strahlpumpeneinheit 300 rein beispielhaft mit dem in Figur 5 gezeigten Stellmechanismus 320A ausgestattet. In dem gezeigten Beispiel ist in der Mitte der Strahlpumpeneinheit 300, also radial innen zwischen den Strahlpumpen 100, ein Flüssigphasenabscheider 250 vorgesehen. Dieser Flüssigphasenabscheider 250 ist zusammen mit den Strahlpumpen in einem gemeinsamen Gehäuse untergebracht, das im Wesentlichen aus dem Mantel 110 der Strahlpumpen 100 gebildet wird. In dem hier gezeigten Beispiel weist der Mantel 110 ein äußeres (113) und ein inneres (114) Rohrstück auf, wobei das innere Rohrstück 114 am oberen Ende gekröpft ist, so dass der Ausgang des Diffusors 105 der Strahlpumpen 100 eine definierte Position in axialer Richtung einnimmt. Der Kern 120 ist in dem hier gezeigten Beispiel in den Mantel 110 eingepresst und mittels Sicken 112 in seiner Position gesichert. Ferner sind in dem hier gezeigten Beispiel Rückschlagventile 360 vorgesehen, die eine Rückströmung von verdichtetem Fluid aus dem Flüssigphasenabscheider 250 in gerade inaktive Strahlpumpen verhindern. Anstelle der hier gezeigten Rückschlagventile 360 kann auch ein im Wesentlichen zu dem eingangsseitigen Stellmechanismus 320A identischer Mechanismus verwendet werden, um den Ausgang der aktiven Strahlpumpen 100 freizugeben, während der Ausgang der inaktiven Strahlpumpen 100 durch den entsprechenden Mechanismus verschlossen wird. Insbesondere kann ein solcher, den Ausgang der Strahlpumpen 100 selektiv verschließender oder freigebender Mechanismus mechanisch mit dem Stellmechanismus 320 gekoppelt sein bzw. durch den gleichen Antrieb aktiviert werden.

Aus dem Flüssigphasenabscheider 250 kann durch zentrale Stichleitungen gasförmiges Kältemittel aus der Gasphase 253 und flüssiges Kältemittel aus der Flüssigphase 252 entnommen werden. Durch die zentrale Anordnung des Flüssigphasenabscheiders 250 zwischen den Strahlpumpen ist eine thermische Isolierung des Flüssigphasenabscheiders 250 von der Umgebung der Strahlpumpeneinheit 300 gegeben, was die Gesamteffizienz des Systems steigert.

Die übrigen Merkmale entsprechen den bereits erläuterten Ausgestaltungen der Strahlpumpeneinheit 300, so dass auf die diesbezüglichen Erläuterungen verwiesen sei.

Es versteht sich, dass die hier separat beschriebenen Merkmale unproblematisch beliebig miteinander kombiniert werden können, so dass die in der Figurenbeschreibung beschriebenen Ausgestaltungen lediglich als Beispiele für das der Erfindung zugrundeliegende Konzept zu verstehen sind.

## Patentansprüche

1. Strahlpumpeneinheit (300) mit zumindest zwei zueinander parallelgeschalteten Strahlpumpen (100) zum Fördern eines Saugfluids (242) in einem Kältemittelkreislauf (200) eines Temperiersystems unter Verwendung eines Treibfluids (231) unter Ausnutzung des Bernoulli-Effekts,
wobei jede der zumindest zwei Strahlpumpen eine Primärdüse (103) zum Beschleunigen des Treibfluids, eine Sekundäranschlussschnittstelle (102) zum Zuführen des Saugfluids, ein Mischrohr (104) stromab der Primärdüse (103) und stromab der Sekundäranschlussschnittstelle (102) und einen Diffusor (105) stromab des Mischrohres (104) aufweist,
wobei die Strahlpumpeneinheit eine gemeinsame Druckleitung (310) zum Zuführen des Treibfluids zu den parallelgeschalteten Strahlpumpen (100) aufweist,
wobei die zumindest zwei Strahlpumpen geometrisch parallel zueinander auf einer gekrümmten Linie angeordnet sind.

2. Strahlpumpeneinheit (300) nach Anspruch 1, wobei die Strahlpumpeneinheit einen gemeinsamen Stellmechanismus (320, 320A, 420) zum selektiven Öffnen und Schließen der gemeinsamen Druckleitung (310) für einzelne, mehrere oder alle der parallelgeschalteten Strahlpumpen (100) aufweist.

3. Strahlpumpeneinheit (300) nach Anspruch 2, wobei der Stellmechanismus (320, 320A, 420) eine innerhalb eines Gehäuses (350) drehbare Drehscheibe (340, 340A, 340B) umfasst, die dazu eingerichtet ist, Öffnungen (312) des Gehäuses (350) selektiv freizugeben und/oder selektiv zu verschließen, wobei jede der Primärdüsen (103) der Strahlpumpen an jeweils zumindest einer der Öffnungen (312) des Gehäuses (350) angeschlossen ist.

4. Strahlpumpeneinheit (300) nach Anspruch 3, wobei die Drehscheibe (340, 340A) zumindest eine Aussparung (324, 324A) aufweist, wobei die zumindest eine Aussparung dazu eingerichtet ist, in Abhängigkeit von einer Drehstellung der Drehscheibe (340, 340A) innerhalb des Gehäuses (350) zumindest teilweise mit den Öffnungen (312) des Gehäuses (350) zur Deckung zu kommen.

5. Strahlpumpeneinheit (300) nach Anspruch 4, wobei die zumindest eine Aussparung (324, 324A) dazu eingerichtet ist, eine oder mehrere der Öffnungen (312) des Gehäuses (350) gleichzeitig freizugeben.

6. Strahlpumpeneinheit (300) nach Anspruch 3, wobei die Drehscheibe (340B) mit einer Trennwand (440) ausgestattet ist, die mit einer nach innen in das Gehäuse (350) ragenden, die Drehscheibe (340B) berührenden, feststehenden Wand (450) des Gehäuses (350) einen durch das Treibfluid durchströmbaren Winkelbereich definiert, wobei die Öffnungen (312) in Umfangsrichtung über das Gehäuse (350) verteilt angeordnet sind und in Abhängigkeit von einer rotatorischen Stellung der Trennwand (440) innerhalb oder außerhalb des durch das Treibfluid durchströmbaren Winkelbereichs liegen.

7. Strahlpumpeneinheit (300) nach einem der vorstehenden Ansprüche, wobei die zumindest zwei Strahlpumpen (100) als Rohr-Ejektoren bereitgestellt sind, aufweisend einen Mantel (110) in Form eines Rohrstücks und einen innerhalb des Mantels angeordneten Kern (120),
wobei der Kern (120) eine innere Geometrie der Strahlpumpen (100) definiert,
wobei der Mantel (110) eine äußere Geometrie der Strahlpumpeneinheit (300) definiert und dazu eingerichtet ist, den Kern (120) mechanisch zu stützen.

8. Strahlpumpeneinheit (300) nach Anspruch 7,
wobei der Kern (120) ein erstes Material aufweist und der Mantel (110) ein zweites Material, das sich von dem ersten Material unterscheidet, aufweist,
wobei das zweite Material eine höhere mechanische Festigkeit und/oder eine höhere Härte als das erste Material aufweist und/oder
wobei bei einer vorbestimmbaren Temperatur das erste Material eine höhere Verformbarkeit aufweist als das zweite Material.

9. Strahlpumpeneinheit (300) nach einem der vorstehenden Ansprüche, wobei ein Flüssigphasenabscheider (250) innerhalb einer von der gekrümmten **Li**nie umgebenen Fläche angeordnet ist.

10. Kältemittelkreislauf (200) für ein Temperiersystem mit einer Strahlpumpeneinheit (300) nach einem der vorstehenden Ansprüche, einem Kompressor (210) zum Verdichten eines Kältemittels (253), einem Kältemittelkondensator (220) zum zumindest teilweisen Kondensieren des Kältemittels stromab des Kompressors (210), und einem Kältemittelverdampfer (240) zum zumindest teilweisen Verdampfen des Kältemittels,
wobei die Strahlpumpeneinheit so angeordnet ist, dass ihr das zumindest teilweise kondensierte Kältemittel (231) stromab des Kältemittelkondensators (220) zu der gemeinsamen Druckleitung als Treibfluid und das zumindest teilweise verdampfte Kältemittel (242) stromab des Kältemittelverdampfers (240) als Saugfluid zugeführt wird, und
wobei stromab eines Ausgangs der Strahlpumpeneinheit ein Gasanteil (253) des Kältemittels saugseitig zu dem Kompressor (210) geführt wird und ein Flüssiganteil (252) des Kältemittels zu dem Kältemittelverdampfer (240) geführt wird.
